# DEMANDE DE BREVET EUROPEEN

(11) **EP 1 936 935 A1**
(43) Date de publication de la demande: **25.06.2008**
(21) Numéro de dépôt: 07150163.9
(22) Date de dépôt: 19.12.2007
(51) Int. Cl.: H04M 3/51

(54) **Procédé et système associé pour l'obtention instantanée d'un consentement client relatif à l'achat d'un produit ou d'un service**

(30) Priorité: 22.12.2006 FR 0655901
(71) Demandeur: FRANCE TELECOM, 75015 Paris (FR)
(72) Inventeur: Lovric, Ivan, 34400, Lunel (FR); Blanchon, Grégory, 34070, MONTPELLIER (FR); Tourneret, Christophe, 34170, CASTELNAUD-LE-LEZ (FR)
(74) Mandataire: Desormiere, Pierre-Louis

(57) **Abrégé**

L'invention concerne un procédé et système associé permettant de recueillir un consentement d'un client (U) au moyen d'un serveur vocal interactif (3) suite à une conversation téléphonique entre le client (U) et un télé-conseiller (A) d'un centre d'appels de manière à valider un achat de ce client. Pour cela, l'invention utilise un serveur vocal interactif (3) qui coopère avec un serveur CTI (7), un dispositif d'enregistrement (51) et une mémoire contextuelle (12).

## Description

### Arrière-plan de l'invention

L'invention se situe dans le domaine des services de télécommunications et concerne plus particulièrement l'intégration de services dans des centres d'appels téléphoniques.

Actuellement, la vente de services ou de biens effectuée via un centre d'appels doit faire l'objet d'un courrier envoyé au client, ce dernier devant obligatoirement confirmer son achat par retour du courrier pour que la vente puisse être considérée comme validée.

Cette obligation existe dans certains pays comme la France (Ordonnance n° 2005-648 du 6 juin 2005 article 1 I Journal Officiel du 7 juin 2005 en vigueur le 1er décembre 2005 et de la Loi n° 2004-575 du 21 juin 2004 article du 24 Journal Officiel du 22 juin 2004 s'appliquant aux ventes initiées par un appel entrant (par exemple, établi par un client vers le centre d'appels en numérotant le « 1014 » sur son téléphone) ou à un appel sortant (appels émis par un centre d'appel vers un client dans le cadre d'opérations de téléventes ou de campagne de télémarketing)).

L'obligation d'avoir une trace écrite pour rendre l'acte de vente valide génère un surcoût pour l'opérateur d'un centre d'appels et par conséquent une perte de chiffre d'affaire pour celui-ci.

Une solution actuellement utilisée pour pouvoir valider ce type de vente, consiste à envoyer au client, par voie postale, par email ou par fax, un courrier résumant l'objet d'une vente, pour laquelle le client a préalablement donné son accord verbalement auprès d'un télé-conseilleur, télé-vendeur ou télé-agent du centre d'appels, ce courrier devant être impérativement retourné signé par le client par voie postale, par email ou par fax, de manière à avoir une trace écrite confirmant que la vente a bien été effectuée.

Cette solution est désavantageuse en ce qu'elle ne permet pas d'obtenir un consentement permettant de valider l'achat d'un client de manière quasi-instantanée suite à une discussion préalable avec un télé-conseiller lors de laquelle le client a passé une commande. Cette solution limite la réactivité du client et freine le processus de vente. En effet, le client a le temps de changer d'avis entre le moment où il confirme une commande de biens ou de services oralement auprès du télévendeur et le moment où il reçoit le courrier relatif à cette commande. De plus, cette solution est fastidieuse pour le client qui est obligé d'attendre le courrier dans un premier temps et de le renvoyer après l'avoir signé dans un deuxième temps.

En outre, la gestion de l'envoi et de la réception des courriers est également fastidieuse et coûteuse pour les centres d'appels. En effet, elle nécessite la réalisation d'un certains nombre de tâches telles que la génération du courrier postal, la mise sous pli et l'envoi du courrier, la mise à jour d'une base de données à partir du courrier, la réception du courrier et son transfert au service concerné, le traitement de la commande et la mise à jour de la base de données de suivi.

### Objet et résumé de l'invention

Pour pallier ces inconvénients, la présente invention propose un procédé de gestion d'appels entre un utilisateur d'un terminal, un serveur vocal interactif, et un agent d'un poste de couplage téléphonie et informatique (dit poste CTI), via des moyens de routage sur un réseau de télécommunications. L'agent obtient des informations de commande de l'utilisateur relatives à l'achat d'au moins un produit ou service lors d'un appel en cours et préalablement établi lors d'une étape de mise en relation entre l'utilisateur et l'agent par les moyens de routage.

Le procédé selon l'invention comprend en outre :
- une étape de transfert de l'appel en cours par les moyens de routage, de manière à mettre en relation l'utilisateur avec le serveur vocal interactif, l'étape de transfert comprenant :
   - une sous-étape de fourniture des informations de commande
- une étape de demande de consentement relatif à l'achat dudit produit ou service, comprenant :
   - une sous-étape de génération, par le serveur vocal interactif, d'un message de demande de consentement, en fonction des informations de commande ; et
   - une sous-étape de fourniture du message de demande de consentement, par le serveur vocal interactif, au terminal de l'utilisateur, de sorte que l'achat dudit produit ou service est validé, sur réception par le serveur vocal interactif d'un message de réponse de consentement émis à partir du terminal en cas de réponse positive de la part de l'utilisateur.

Le procédé selon l'invention permet d'obtenir rapidement et simplement le consentement de l'utilisateur pour l'achat de produits ou de services que l'agent a préalablement sélectionnés en accord avec l'utilisateur lors d'une communication. Dans le cas où l'utilisateur accepte la commande en envoyant une réponse positive au serveur vocal interactif, l'achat peut être validé, de manière avantageuse, dès la réception de la réponse positive de l'utilisateur. De cette manière, l'achat de l'utilisateur peut être validé, évitant ainsi un traitement fastidieux selon lequel le centre d'appel envoie dans un premier temps un courrier par voie postale à l'utilisateur, ce dernier devant dans un deuxième temps le renvoyer signé au centre d'appel.

Selon une caractéristique de l'invention, le procédé selon l'invention comprend en outre une autre étape d'enregistrement, lors de laquelle la conversation entre l'utilisateur et l'agent est enregistrée dans une mémoire contextuelle.

De manière avantageuse, la mémoire contextuelle constitue un outil de traçabilité des ventes efficace. Cette mémoire contextuelle permet d'enregistrer un achat/une vente dans son contexte. Ainsi, elle peut être utilisée pour mémoriser la conversation, qui a permis à l'agent de convenir lors d'une conversation préalable avec l'utilisateur de la vente/achat de produits et/ou de services. De plus, elle permet de mémoriser les produits vendus par chaque agent.

Selon une autre caractéristique de l'invention, en cas d'absence de réponse ou en cas de réponse négative de l'utilisateur au message de demande de consentement, l'appel établi à l'issue de l'étape de transfert entre le serveur vocal interactif et l'utilisateur est transféré automatiquement vers le poste CTI de l'agent, de manière à mettre l'utilisateur en communication directe avec l'agent.

Ce transfert d'appel automatique permet à l'utilisateur d'être remis en communication directe et de manière transparente avec l'agent. Cette caractéristique est particulièrement avantageuse pour faciliter la validation d'un achat dont la validation a échoué, par exemple dans le cas où l'utilisateur aurait stoppé l'appel en cours avec le serveur vocal interactif de manière volontaire (par exemple, en cas de doute de la part de l'utilisateur) ou involontaire (erreur de la part de l'utilisateur, ou problème technique quelconque).

Selon une autre caractéristique de l'invention, le serveur vocal interactif fournit une pluralité d'options prédéfinies, que l'utilisateur est susceptible de sélectionner à partir de son terminal pour fournir un message de réponse au message reçu du serveur vocal interactif lors de l'étape de fourniture d'un message de demande de consentement.

Ces options sont prévues pour que l'utilisateur puisse donner son consentement immédiatement en répondant au message de demande de consentement, permettant ainsi une validation instantanée de l'achat, directement après avoir effectué la commande auprès de l'agent.

Selon une autre caractéristique de l'invention, le serveur vocal interactif lit, lors de la sous-étape de fourniture d'un message de demande de consentement, les informations de commande obtenues lors de la sous-étape de fourniture.

De cette manière, le serveur vocal interactif rappelle à l'utilisateur les produits ou services qu'il a commandés et pour lesquels il est prêt à donner son consentement d'achat.

L'invention vise également un système de gestion d'appels entre un utilisateur d'un terminal, un serveur vocal interactif, et un agent d'un poste de couplage téléphonie et informatique (dit poste CTI), via des moyens de routage sur un réseau de télécommunications, dans lequel l'agent obtient des informations de commande de l'utilisateur relatives à l'achat d'au moins un produit ou service lors d'un appel en cours et préalablement établi lors d'une étape de mise en relation entre l'utilisateur et l'agent par les moyens de routage.

Le système selon l'invention comprend en outre :
- des moyens de transfert de l'appel en cours, de manière à mettre en relation l'utilisateur avec le serveur vocal interactif ;
- des moyens de fourniture desdites informations de commande au serveur vocal interactif ;
- des moyens pour demander un consentement relatif à l'achat dudit produit ou service ; - des moyens de génération d'un message de demande de consentement en fonction des informations de commande ; et
- des moyens de fourniture pour fournir un message de demande de consentement au terminal de l'utilisateur, de sorte que l'achat dudit produit ou service est validé sur réception, par le serveur vocal interactif, d'un message de réponse de consentement émis à partir du terminal en cas de réponse positive de la part de l'utilisateur.

Selon une caractéristique de l'invention, le système selon l'invention comprend en outre des moyens d'enregistrement adaptés à enregistrer la conversation entre l'utilisateur et l'agent.

Selon une autre caractéristique de l'invention, le système comprend des moyens de routage adaptés à transférer l'appel établi entre le serveur vocal interactif et l'utilisateur automatiquement vers le poste CTI de l'agent, en cas d'absence de réponse ou en cas de réponse négative de l'utilisateur au message de demande de consentement, de manière à mettre l'utilisateur en communication directe avec l'agent.

Selon une autre caractéristique de l'invention, le système selon l'invention comprend un serveur vocal interactif comprenant des moyens adaptés à fournir une pluralité d'options prédéfinies, que l'utilisateur est susceptible de sélectionner à partir de son terminal, pour fournir un message de réponse au message reçu du serveur vocal interactif.

Selon une autre caractéristique de l'invention, le serveur vocal interactif comprend des moyens pour transmettre vocalement les informations de commande au terminal de l'utilisateur.

L'invention concerne encore un serveur vocal interactif comprenant des moyens pour :
- générer un message de demande de consentement en fonction d'informations de commande reçues sur ledit serveur, lesdites informations de commande étant relatives à l'achat d'au moins un produit ou service par un utilisateur,
- fournir ledit message de demande de consentement au terminal de l'utilisateur, et
- valider l'achat dudit produit ou service sur réception d'un message de réponse de consentement émis à partir du terminal.

### Brève description des dessins

D'autres caractéristiques et avantages de l'invention ressortiront de la description suivante du mode de réalisation, donné à titre d'exemple non limitatif, en référence aux dessins annexés, sur lesquels :
- la figure 1 illustre, de manière schématique, une architecture d'un système selon un mode de réalisation de l'invention ;
- la figure 2 décrit, de manière schématique, un bandeau CIT 100 accessible sur un poste CTI 4 dans le cadre de l'invention ; et
- la figure 3 décrit, sous forme d'organigramme, les étapes principales du procédé de gestion d'appels selon l'invention appliqué au système de la figure 1.

### Description détaillée d'un mode de réalisation de l'invention

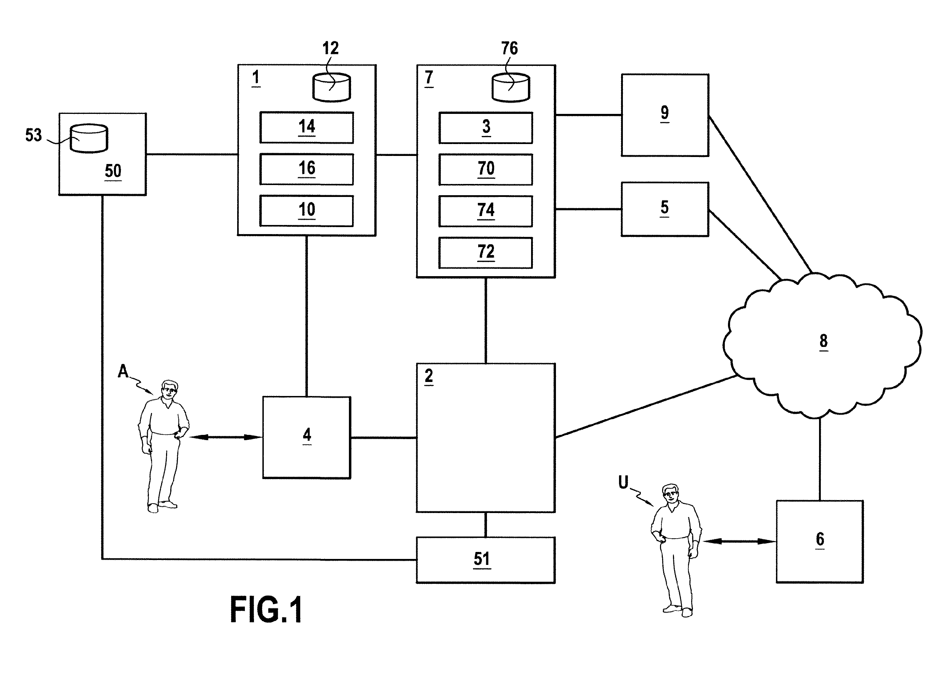

La figure 1 décrit de manière schématique un système selon l'invention comprenant un serveur applicatif 1 apte à communiquer avec un serveur vocal interactif 3.

Conformément à l'invention, ce système permet de gérer des appels téléphoniques entre un télé-conseiller ou agent A logué sur un poste 4 dit poste CTI (Couplage Téléphonie Informatique) localisé dans un centre d'appels, et un utilisateur U d'un terminal 6, par l'intermédiaire d'un réseau intelligent 8.

De manière connue, le poste CTI 4 est adapté à recevoir et émettre des communications téléphoniques à travers un réseau téléphonique commuté (RTC) et/ou un réseau IP. Il peut également gérer des applications informatiques sur un réseau IP. En pratique, le poste CTI 4 est constitué par un ordinateur couplé à un téléphone.

Le terme « réseau intelligent » désignera par la suite un réseau constitué par un réseau de télécommunication commuté (RTC) couplé à un réseau IP tel qu'Internet, permettant de faire transiter des appels téléphoniques classiques ainsi que des appels VoIP (Voice over IP) entre le poste CTI 4 du télé-conseiller A et le terminal 6 de l'utilisateur U.

Dans cet exemple de réalisation, le serveur applicatif 1 est un moteur applicatif de type Jonas ou SUN équipé d'une interface pour communiquer avec le poste CTI 4, selon le protocole connu TCP/IP (« Transmission Control Protocol / Internet Protocol »).

Le serveur vocal interactif 3 est implémenté dans un serveur CTI 7, par exemple au moyen du progiciel existant Genesys^{®} en utilisant plus particulièrement le module de routage « Genesys Interaction Routing Designer ». Le serveur CTI 7 implémente un module de routage 70 dit « module URS » (pour « Universal Routing Service ») adapté à router des appels téléphoniques, notamment vers le terminal 6 de l'utilisateur U. Le service fournit par le module URS est le routage intelligent des appels.

Le serveur CTI 7 comprend en outre un serveur SIP 74 apte à communiquer selon le protocole connu SIP (« Session Initiation Protocol ») avec une passerelle VoIP 9, placée en coupure de flux entre le serveur CTI 7 et le réseau intelligent 8.

Le serveur applicatif 1 commande une application Java dite Servlet qui implémente un module 10 de gestion bandeau CTI permettant de gérer un bandeau CTI 100 qui est accessible depuis le poste CTI 4 du télé-conseiller A. Le bandeau CTI est une interface Homme/Machine (IHM) permettant à l'utilisateur d'interagir sur la téléphonie à partir de son poste de travail.

On considère le cas où le poste CTI 4 du télé-conseiller A comprend un téléphone VoIP apte à communiquer avec le serveur CTI 7 via un autocommutateur 2 ou PABX (soit « Public Automatic Branch exchange ») compatible avec le protocole TCP/IP.

Toutefois, dans le cas, où la fonction « téléphonie » du poste CTI 4 du télé-conseiller A est réalisée par un téléphone classique, le serveur CTI 7 comprend un module 72 de traduction d'événements (T-Server) permettant d'émettre des événements à destination du serveur applicatif 1 à partir d'événements reçus de l'autocommutateur 2, ces événements étant récupérés et traités par une boucle d'événements implémentée sur le serveur applicatif 1.

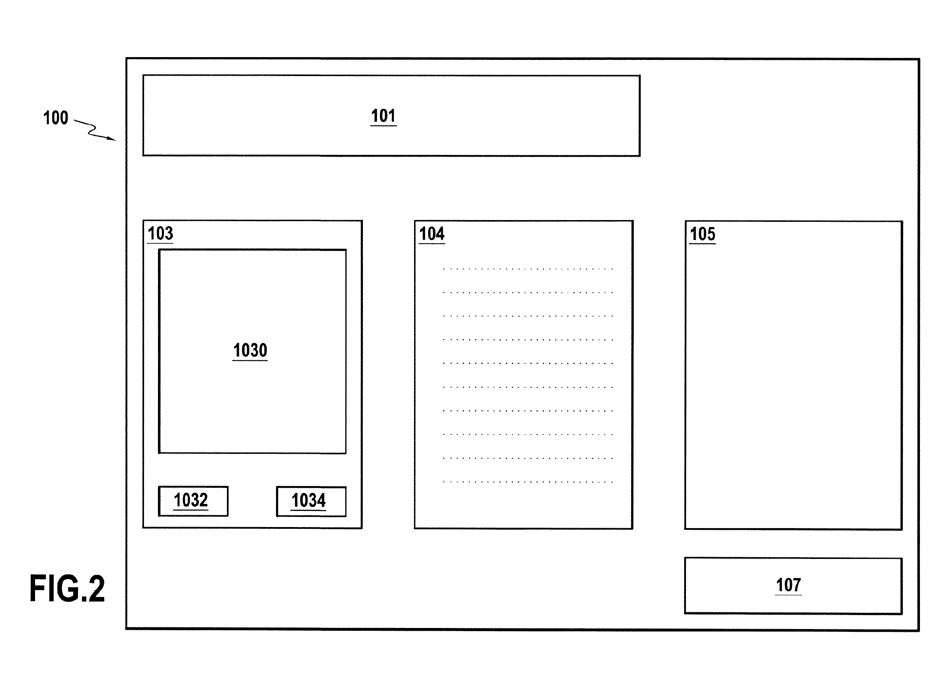

Le télé-conseiller A accède au bandeau CTI 100 sur son poste CTI 4 en se connectant au serveur applicatif 1. Pour cela, le télé-conseiller A entre l'adresse URL correspondant au serveur applicatif 1, telle que http://localhost:28080/procap04, dans un champ d'adresse 101 d'une fenêtre d'un navigateur web (par exemple Internet Explorer, Mozilla Firefox) à partir de son poste CTI 4. A titre d'exemple, le bandeau CTI 100 comprend les trois champs suivants comme illustré sur la figure 2.

Un premier champ 103 est prévu pour gérer la connexion à une application de gestion des télé-conseillers du centre d'appel. Cette application fonctionne sur le serveur applicatif 1 et permet au télé-conseiller A d'entrer ses coordonnées et de se loguer, par exemple en appuyant sur un bouton de connexion « Se Loguer » 1032 et de déclarer sa disponibilité pour répondre à un appel, par exemple en appuyant sur un bouton de disponibilité « Se mettre en Ready » 1034.

Un deuxième champ 104 destiné à afficher des informations relatives à un client (ou utilisateur) avec lequel le télé-conseiller est en relation, telles que son numéro de téléphone, nom, prénom, adresse email et adresse postale. D'autres informations personnelles relatives au client peuvent être également incluses, telles que ses centres d'intérêts ou le type de produits que le client a déjà achetés via le centre d'appels.

Un troisième champ 105 destiné à afficher une liste de produits disponibles à l'achat et que le télé-conseiller peut proposer au client avec lequel il est en communication. Ce troisième champ 105 permet au télé-conseiller de facilement visionner l'ensemble des produits disponibles à la vente et de sélectionner un ou plusieurs de ces produits en cochant une case d'activation correspondante prévue à cet effet, au cours de la communication avec le client.

Le bandeau CTI 100 comprend également un bouton de consentement 107 dit « consentement Client » sur lequel le télé-conseiller appuie lorsqu'il a convenu d'une vente avec le client, ou tout autre moyen permettant cette fonction, tel qu'un écran tactile, notamment après avoir sélectionné un ou plusieurs produits de la liste fournie dans le deuxième champ 104 en fonction des instructions du client afin de recueillir le consentement du client pour l'achat des produits sélectionnés par le télé-conseiller.

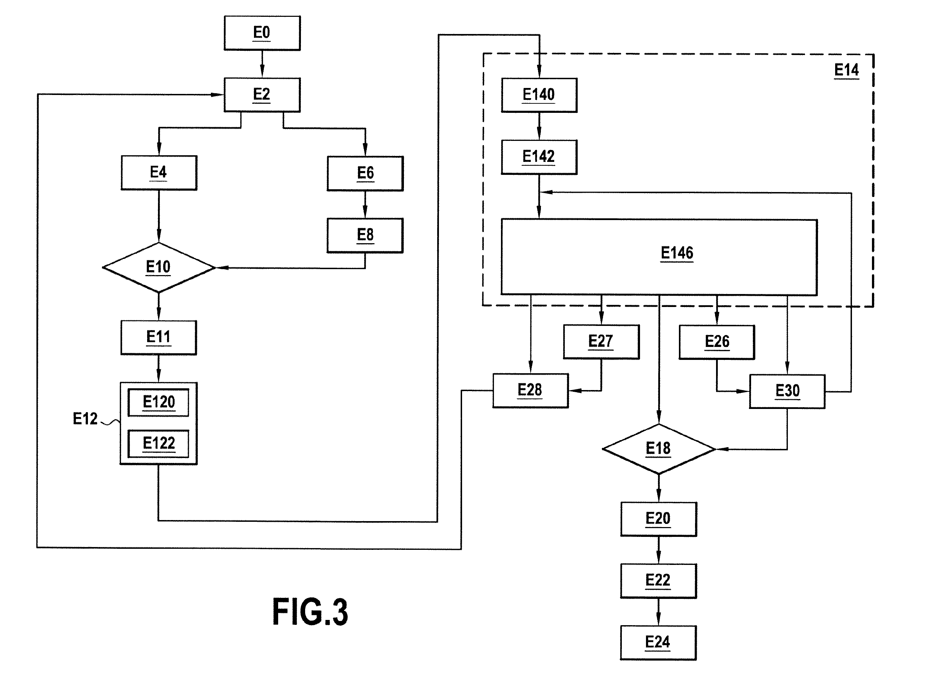

Un exemple de réalisation du procédé selon l'invention va maintenant être décrit en détails en référence aux figures 1, 2 et 3. Dans cet exemple nous considérons que l'utilisateur U du terminal 6 souhaite entrer en contact avec un télé-conseiller A pour passer une commande et effectuer un achat par téléphone. On suppose qu'au préalable, le télé-conseiller A s'est connecté à l'application de gestion des télé-conseillers (notamment une application dite PRO-CAP, « PRO » pour PROactif et « CAP » pour Centre d'Appel Proactif) à partir de son poste CTI 4 et qu'il s'est déclaré disponible à recevoir des appels en ayant par exemple activé le bouton de disponibilité 1034 « Se mettre en Ready » sur le bandeau CTI 100.

On suppose que l'utilisateur U compose sur son terminal 6 un numéro d'appel entrant du centre d'appels lors d'une étape initiale E0. Sur réception de cet appel entrant, le système selon l'invention établit une communication directe entre l'utilisateur U et le télé-conseiller A, lors d'une étape de mise en relation E2, selon des mécanismes connus par l'homme du métier. Bien évidemment, l'homme du métier pourra également effectuer l'étape de mise en relation E2, en réponse à un appel sortant du centre d'appel lors duquel le télé-conseiller A cherche à entrer en communication avec l'utilisateur U.

A partir du moment où la communication est établie à l'issue de l'étape de mise en relation E2, une conversation téléphonique s'établit entre l'utilisateur U est le télé-conseiller A. Lors d'une première étape d'enregistrement E4, la conversation téléphonique est alors enregistrée dans une base de données d'enregistrement 53 sur un serveur d'enregistrement 50. L'enregistrement de cette conversation téléphonique permet alors de garder une trace qui pourra être avantageusement exploitée lors d'étapes ultérieures du procédé selon l'invention. En particulier, cet enregistrement pourra fournir des éléments de preuve en cas de contestation d'un achat réalisé par un utilisateur.

Plus précisément, lors d'une première étape d'enregistrement E4, le serveur applicatif 1 contrôle le serveur d'enregistrement 50 qui lui-même pilote un enregistreur 51 relié à l'autocommutateur 2 de manière à réaliser l'enregistrement de la conversation de l'appel en cours. Dans ce mode de réalisation de l'invention, la première étape d'enregistrement E4 est initiée automatiquement sur réception d'un événement « EventEstablished » indiquant que l'utilisateur et le télé-conseiller sont en communication. Le module 72 de traduction d'évènements (T-Server) génère cet évènement qui est transmis au serveur applicatif 1. Ensuite, le serveur applicatif 1 commande la fonction « getTimeSlot » qui permet de déterminer le canal sur lequel la communication entre l'utilisateur et le télé-conseiller est établie. L'enregistrement de la conversation est lancé en réponse à un appel de la fonction « StartEnreg » par le serveur applicatif 1 sur le canal identifié précédemment.

On notera que d'autres paramètres tels qu'un identifiant du télé-conseiller, le numéro de l'utilisateur appelant, un paramètre temporel peuvent être également passés à la fonction « StartEng », ces paramètres étant utilisés par la suite pour référencer de manière unique l'enregistrement de la conversation.

Dès le début de la conversation avec l'utilisateur U, le télé-conseiller A peut obtenir, lors d'une étape de remontée de fiche client E6, des renseignements relatifs à cet utilisateur U avec lequel il est actuellement en communication, de sorte que le télé-conseiller A est en mesure de visualiser directement ces renseignements sur le bandeau CTI 100.

Si l'utilisateur U est déjà connu du centre d'appels cela signifie que la fiche de renseignements de cet utilisateur a été préalablement stockée dans une base de données clients 76. Dans ce cas, lors de l'étape de remontée de fiche client E6, le serveur applicatif 1 obtient la fiche par requête dans la base de données client 76, à partir du numéro de téléphone de l'utilisateur U, obtenu grâce au module 72 de traduction d'évènements (T-Server), avec lequel le télé-conseiller A est en relation. Le serveur applicatif 1 se charge ensuite de transmettre la fiche client au télé-conseiller A via le bandeau CTI 100.

Si aucune fiche ne correspond au numéro de téléphone ainsi obtenu, le télé-conseiller A a la possibilité de créer une nouvelle fiche client directement à partir du bandeau CTI 100 sur son poste CTI 4, en remplissant manuellement le deuxième champ 104 (nom, numéro de téléphone, adresse postale de l'utilisateur avec lequel il est en communication).

Au cours de la conversation téléphonique, le télé-conseiller A présente oralement à l'utilisateur U une liste de produits à la vente susceptibles d'intéresser l'utilisateur U, le contenu de cette liste étant affichée dans le troisième champ 105 du bandeau CTI 100.

En fonction des instructions de l'utilisateur U au cours de la conversation téléphonique, le télé-conseiller A sélectionne parmi les produits de la liste présentés sur le bandeau CTI 100, ceux que l'utilisateur U souhaite acheter, de manière à constituer une liste d'achat propre à cet utilisateur. Pour simplifier la constitution de la liste d'achats, il est prévu dans le deuxième champs 104 du bandeau CTI 100 des éléments de sélection sur lesquels le télé-conseiller peut agir, par exemple au moyen d'un clic ou d'un contact, pour sélectionner un produit que l'utilisateur souhaite acheter.

Dès lors que la liste d'achats est établie, celle-ci est enregistrée dans une mémoire contextuelle 12, lors d'une deuxième étape d'enregistrement E8, permettant ainsi de garder une trace des produits que l'utilisateur souhaite acheter. La mémoire contextuelle 12 a été représentée ici à titre d'exemple comme faisant partie intégrante du serveur applicatif 1, mais peut bien évidemment être placée à distance du serveur applicatif 1. La mémoire contextuelle 12 permet ainsi de garder une trace des produits vendus par chaque télé-conseiller et des produits achetés par chaque utilisateur.

A la fin de la conversation, le télé-conseiller A demande à l'utilisateur U s'il souhaite passer en phase de validation de son achat (étape de test E10). En cas de réponse négative, c'est-à-dire si l'utilisateur souhaite abandonner l'achat, le télé-conseiller raccroche son combiné, ce qui provoque la fin de l'enregistrement de la conversation et la communication entre l'utilisateur et le télé-conseiller est coupée (étape finale E24). Un module 5 de pilotage du réseau intelligent, dit module CRSP (pour « Call Routing Service Protocol ») placé en coupure de flux entre le réseau intelligent 8 et le serveur CTI 7, est prévu pour libérer l'appel et libérer ainsi des ressources du centre d'appels, dès lors que le télé-conseiller ou l'utilisateur raccroche son combiné téléphonique.

L'enregistrement est automatiquement stoppé à la fin de la conversation en appelant la fonction « StopEnreg » à partir du serveur d'enregistrement 50 et en suite à la détection de l'événement « EventReleased » fourni par le module 72 de traduction d'évènements lorsque le télé-conseiller raccroche.

Toutefois, on notera que si au cours de la conversation, l'utilisateur informe le télé-conseiller qu'il ne souhaite pas que sa conversation soit enregistrée, le télé-conseiller peut stopper à tout moment l'enregistrement de la conversation manuellement. Dans ce cas, la fonction « StopEnregOnDemand » est implémentée.

Si la conversation a été enregistrée et si, à la fin de celle-ci, une vente a été convenue avec le télé-conseiller et que l'utilisateur souhaite procéder à la validation de son achat (étape de test E10 positif), l'enregistrement de la conversation peut être marqué lors d'une étape de marquage E11, de manière à conserver une trace de cette volonté d'achat de l'utilisateur U. A cet effet, le télé-conseiller A commande à partir de son bandeau CTI 100 l'exécution de la fonction « TagVente » sur le serveur applicatif 1. Cette fonction a pour effet d'associer un tag d'identification à la conversation enregistrée, qui est stocké temporairement dans la mémoire contextuelle 12.

Après que l'utilisateur U ait donné son accord oralement auprès du télé-conseiller A pour procéder à la validation de son achat, l'utilisateur est mis en relation avec le serveur vocal interactif 3. A cet effet, le télé-conseiller A déclenche le transfert de l'appel en cours vers le serveur vocal interactif 3, lors d'une étape de transfert E12, de sorte que l'utilisateur soit mis en relation de manière transparente avec le serveur vocal interactif 3.

Le télé-conseiller peut notamment appuyer sur le bouton « Consentement Client » 107 de son bandeau CTI 100, qui commande l'envoi d'une commande de transfert d'appel vers le serveur vocal interactif 3. Sur réception de cette commande de transfert d'appel, le serveur applicatif 1 exécute les deux fonctions « UpdateUserData » et « SingleStepTransfer » afin d'agir sur l'appel en cours.

Lors d'une sous-étape d'attachement E120, la liste d'achats est transmise conjointement avec l'appel lors de son transfert. Cette liste comprend des informations de commande relatives aux produits que l'utilisateur a préalablement commandés auprès du télé-conseiller. De telles informations comprennent la référence, le prix de chacun des produits pour lesquels l'utilisateur est prêt à donner un consentement d'achat formel. Dans cet exemple, le serveur applicatif 1 exécute la fonction « UpdateUserData » qui attache à l'appel les informations de commande contenues dans la liste d'achat, en tant que données d'appel.

Lors d'une sous-étape de routage E122, l'appel courant entre le télé-conseiller A et l'utilisateur U du terminal 6 est routé vers le serveur vocal interactif 3. Pour cela, le serveur applicatif 1 exécute la fonction « SingleStepTransfer », de sorte qu'à l'issue de l'exécution de cette fonction, l'utilisateur U du terminal 6 est mis en relation avec le serveur vocal interactif 3 et non plus avec le télé-conseiller A.

Lors d'une étape de demande de consentement E14, le serveur vocal interactif 3 fournit, au terminal 6 de l'utilisateur U, un message de demande de consentement relatif à l'achat des produits, selon les informations de commande.

A titre d'exemple, ce message de demande de consentement comprend un message audio décrivant les produits commandés par l'utilisateur. Le message audio peut être généré lors d'une de génération E140 par un module de synthèse vocale (non représenté) du serveur vocal interactif 3 à partir des informations de commande préalablement fournies au serveur vocal interactif 3 lors de la sous-étape d'attachement E120.

Selon une autre variante de réalisation, une séquence audio pour chaque produit disponible à la vente est préalablement stockée dans une base de données de produits, le serveur vocal interactif 3 se chargeant alors de récupérer les séquences audio des produits que l'utilisateur a commandés.

Lors d'une sous-étape de lecture E142, le serveur vocal interactif 3 exécute la fonction « Play Announcement » qui effectue la lecture du message audio à l'utilisateur du terminal 6 permettant de lui rappeler oralement le descriptif des produits qu'il a commandés.

Lors d'une sous-étape de fourniture d'options E146, Le serveur vocal interactif 3 propose à l'utilisateur différentes options permettant de le guider, de manière à fournir au serveur vocal interactif 3 une réponse de consentement. Ces options sont par exemple présentées sous forme d'un message vocal auxquelles l'utilisateur peut répondre en appuyant sur les touches de son terminal 6.

Dans d'autres variantes de réalisation, l'utilisateur du terminal 6 pourra répondre à cette demande de consentement en utilisant des mots clés vocaux ou encore par tout autre dispositif de sélection des options mis à disposition de l'utilisateur sur son terminal 6.

A titre d'exemple, le serveur vocal interactif 3 invite l'utilisateur U du terminal 6, à utiliser un menu d'options prédéfini sur le serveur vocal interactif 3 et accessible depuis le terminal 6 de l'utilisation. Lors de la sous-étape de fourniture d'options E146, le serveur vocal interactif 3 présente à l'utilisateur les différentes options disponibles pour les différentes possibilités de réponse. A titre d'exemple, le message vocal d'accueil principal invite l'utilisateur 6 à appuyer sur :
- la « touche 2 » de son terminal pour confirmer l'achat des produits présentés lors la sous-étape de lecture E142 précédente,
- la « touche 3 » pour écouter à nouveau la conversation téléphonique qu'il a eue préalablement avec le télé-conseiller,
- la « touche 4 » pour recevoir une confirmation de son achat selon un ou plusieurs supports de son choix, tel qu'un courrier papier, un message électronique ou e-mail, une télécopie ou fax, un message court ou SMS,
- la « touche 9 » pour être remis en contact automatiquement avec le télé-conseiller.

Si l'utilisateur U appuie sur la « touche 2 » de son terminal 6 et qu'un événement d'achat est prêt à être transféré (étape de test positif E18) vers la base de données clients 76, l'appui sur la « touche 2 » (réponse de l'utilisateur U) est alors détectée par la fonction « Collect Digit » implémenté au niveau du serveur vocal interactif 3. Cette réponse est alors enregistrée en association avec sa liste d'achats, dans la base de données clients 76, lors d'une étape de stockage E20.

De manière avantageuse, cette réponse constitue une preuve de consentement confirmant que l'utilisateur U a validé l'achat des produits référencés dans la liste d'achats. Il s'agit d'une réponse positive au message de demande de consentement émis par le serveur vocal interactif 3. Cette preuve est archivée dans la base de données clients 76 en association avec la liste d'achats et éventuellement avec la conversation téléphonique préalablement enregistrée. Dès lors que cette preuve est obtenue et stockée dans la base de donnée clients 76, l'achat des produits associés est considérée comme validée (étape de validation de l'achat E22). Ceci marque ainsi la fin du procédé selon l'invention et la communication entre l'utilisateur U et le télé-conseiller est coupée lors de l'étape finale E24.

Si l'utilisateur appuie sur la « touche 3 » de son terminal en réponse au message vocal d'accueil principal, le serveur vocal interactif 3 fait réécouter à l'utilisateur U, lors d'une étape d'écoute de la conversation E30, la conversation qu'il a eue préalablement avec le télé-conseiller A, cette conversation ayant étant stockée dans la mémoire contextuelle 12. Dans le cas où plusieurs conversations ont déjà eu lieu entre l'utilisateur U et le télé-conseiller A, le serveur vocal interactif 3 propose à l'utilisateur de basculer d'une conversation à l'autre, notamment en appuyant sur des touches de son terminal : par exemple sur la « touche 5 » pour aller à la conversation précédente et sur la « touche 6 » pour aller à la conversation suivante. Après réécoute d'une ou plusieurs conversations, l'utilisateur est reconduit par le serveur vocal interactif au message vocal d'accueil principal et l'utilisateur est invité à faire un choix de réponse lors de l'étape de réponse E16.

Si l'utilisateur appuie sur la « touche 4 » de son terminal 6 en réponse au message vocal d'accueil principal, un menu d'options du serveur vocal interactif 3 propose à l'utilisateur U un ensemble de supports (email, fax, courrier postal) pour l'envoi d'une confirmation de son achat. La validation est alors effective, suite à la réponse du client par courrier papier signé, par message électronique (e-mail) renvoyé par un mécanisme de chiffrement, télécopie signée, etc... L'utilisateur peut alors par l'intermédiaire de son terminal 6 sélectionner par quel support il souhaite recevoir la confirmation de son achat. Lors d'une étape d'envoi de confirmation E26, le serveur vocal interactif 3 effectue l'envoi de la confirmation de l'achat selon le support sélectionné par l'utilisateur. S'il existe un événement d'achat à traiter (étape de test E18 positif), alors les étapes E20, E22 et E24 sont enchaînées comme décrit précédemment.

Dans le cas où l'utilisateur a un doute sur son achat et qu'il souhaite s'entretenir à nouveau avec le télé-conseiller A, l'utilisateur appuie par exemple sur la touche « 9 » de son terminal 3 en réponse au message vocal d'accueil principal, ce qui provoque la mise en relation automatique de l'utilisateur U avec le télé-conseiller A, avec lequel il a préalablement établi sa commande. Pour cela, lors d'une étape de transfert d'appel E28, le serveur vocal interactif 3 route l'appel en cours vers le poste CTI 4 du télé-conseiller A en exécutant la fonction « TRoute », et en utilisant des informations enregistrées dans la mémoire contextuelle 12 (liste des produits commandés par l'utilisateur, données d'identification de l'utilisateur et du télé-conseiller). De cette manière, le télé-conseiller retrouve sur son bandeau CTI le contexte de la vente convenue préalablement avec l'utilisateur.

En cas de non réponse (étape E27) de la part de l'utilisateur aux options fournies par le serveur vocal interactif 3 lors de l'étape E16, le serveur vocal interactif 3 relit le message d'accueil principal à l'utilisateur. Ceci est le cas par exemple lorsque l'utilisateur n'appuie sur aucune touche de son terminal ou bien fait une réponse erronée, c'est-à-dire en appuyant sur une touche qui n'est pas prédéfinie dans le menu d'options du serveur vocal interactif 3. Si l'utilisateur ne répond pas à nouveau, le serveur vocal interactif considère que la commande ou achat n'est pas confirmée et renvoie l'utilisateur vers le télé-conseiller par le rétablissement d'une communication téléphonique à partir des données enregistrées dans la mémoire contextuelle 12, selon l'étape de transfert E28 telle que décrite précédemment.

Le rétablissement automatique de la communication entre l'utilisateur et le télé-conseiller en cas d'échec de la confirmation de l'achat par l'utilisateur améliore l'interactivité entre l'utilisateur U et télé-conseiller A et contribue à améliorer les ventes réalisées à partir d'un centre d'appels.

Le parcours de l'utilisateur U du terminal 6 à travers le menu d'options du serveur vocal interactif 3 est mémorisé de manière avantageuse dans la mémoire contextuelle 12. De cette manière, l'opérateur du centre d'appel est en mesure de savoir si une vente a été conclue et, dans le cas contraire, à quelle étape du procédé la vente a échoué. En particulier, il peut savoir si l'utilisateur a refusé de donner son consentement lors de l'étape E16 de demande de consentement.

## Revendications

1. Procédé de gestion d'appels entre un utilisateur (U) d'un terminal (6), un serveur vocal interactif (3), et un agent (A) d'un poste de couplage téléphonie et informatique (CTI) (4), via des moyens de routage (2, 70) sur un réseau de télécommunications (8), selon lequel l'agent (A) obtient des informations de commande de l'utilisateur relatives à l'achat d'au moins un produit ou service, lors d'un appel en cours et préalablement établi lors d'une étape de mise en relation (E2) entre l'utilisateur (U) et l'agent (A) par lesdits moyens de routage (2, 70), ledit procédé comprenant :
- une étape de transfert (E12) de l'appel en cours par les moyens de routage (2, 70), de manière à mettre en relation l'utilisateur (U) avec le serveur vocal interactif (3) ;
ledit procédé étant **caractérisé en ce que** :
- lors d'une étape d'enregistrement (E8), lesdites informations de commande sont enregistrées dans une mémoire contextuelle (12) ;
- ladite étape de transfert (E12) comprend :
- une sous-étape d'attachement (E120) desdites informations de commande à l'appel en cours ;
- une sous-étape de routage (E122) de l'appel en cours vers le serveur vocal interactif (3) ;
et **en ce qu'**il comprend en outre :
- une étape de demande de consentement (E14) relatif à l'achat dudit produit ou service, comprenant :
- une sous-étape de génération (E140) par le serveur vocal interactif (3) d'un message de demande de consentement en fonction desdites informations de commande ; et
- une sous-étape de fourniture (E142 ; E16) dudit message de demande de consentement, par le serveur vocal interactif (3), au terminal (6) de l'utilisateur, de sorte que l'achat dudit produit ou service est validé en cas de réponse positive de la part de l'utilisateur (U), sur réception par le serveur vocal interactif (3) d'un message de réponse de consentement émis à partir du terminal (6), ledit message de réponse étant enregistré dans une base de données clients (76), lors d'une étape de stockage (E20), en association avec les informations de commande préalablement enregistrées dans la mémoire contextuelle (12) ;
et **en ce que** :
en cas d'absence de réponse ou en cas de réponse négative de l'utilisateur (U) audit message de demande de consentement, l'appel établi à l'issue de l'étape de transfert (E12) entre le serveur vocal interactif (3) et l'utilisateur (U) est transféré, lors d'une étape de transfert d'appel (E28) automatiquement vers le poste CTI (4) de l'agent, à partir des informations de commande enregistrées dans la mémoire contextuelle (12), de manière à mettre l'utilisateur (U) en communication directe avec l'agent (A).

2. Procédé selon la revendication 1, **caractérisé en ce qu'**il comprend en outre une autre étape d'enregistrement (E4) lors de laquelle la conversation entre l'utilisateur et l'agent est enregistrée dans la mémoire contextuelle (12).

3. Procédé selon la revendication 1 ou 2, **caractérisé en ce que** le serveur vocal interactif (3) fournit à l'utilisateur (U) du terminal (6), lors d'une étape de fourniture d'options (E146), une pluralité d'options prédéfinies, que l'utilisateur (U) est susceptible de sélectionner à partir de son terminal (6), pour fournir un message de réponse audit message de demande de consentement reçu du serveur vocal interactif (3).

4. Procédé selon l'une quelconque des revendications 1 à 3, **caractérisé en ce que** le serveur vocal interactif (3) lit, lors de la sous-étape de fourniture d'un message de demande de consentement (E142), les informations de commande obtenues lors de ladite sous-étape de fourniture (E120).

5. Système de gestion d'appels entre un utilisateur (U) d'un terminal (6), un serveur vocal interactif (3), et un agent (A) d'un poste de couplage téléphonie et informatique (CTI) (4), via des moyens de routage (2, 70) sur un réseau de télécommunications (8), dans lequel l'agent (A) obtient des informations de commande de l'utilisateur relatives à l'achat d'au moins un produit ou service lors d'un appel en cours et préalablement établi lors d'une étape de mise en relation (E2) entre l'utilisateur (U) et l'agent (A) par lesdits moyens de routage, ledit système comprenant en outre :
- des moyens de transfert (1) de l'appel en cours, de manière à mettre en relation l'utilisateur (U) avec le serveur vocal interactif (3),
- des moyens de fourniture (1) desdites informations de commande au serveur vocal interactif (3) ; ledit système étant **caractérisé en ce qu'**il comprend en outre :
- une mémoire contextuelle (12) destinées à enregistrer les informations de commande ;
- des moyens d'attachement (1) desdites informations de commande à l'appel en cours destiné à être routé vers le serveur vocal interactif (3) par les moyens de routage (1) ;
- des moyens (3) pour demander un consentement relatif à l'achat dudit produit ou service comprenant :
- des moyens de génération (3) d'un message de demande de consentement en fonction des informations de commande ; et
- des moyens de fourniture (3) pour fournir un message de demande de consentement au terminal (6) de l'utilisateur, de sorte que l'achat dudit produit ou service est validé sur réception par le serveur vocal interactif (3) d'un message de réponse de consentement émis à partir du terminal (6) en cas de réponse positive de la part de l'utilisateur (U) ; en cas d'absence de réponse ou en cas de réponse négative de l'utilisateur (U) audit message de demande de consentement, le système comprend des moyens de routage adaptés à transférer l'appel établi entre le serveur vocal interactif (3) et l'utilisateur (U) automatiquement vers le poste CTI (4) de l'agent (A), de manière à mettre l'utilisateur (U) en communication directe avec l'agent (A).

6. Système selon la revendication 5, **caractérisé en ce qu'**il comprend en outre des moyens d'enregistrement (50, 51, 12) adaptés à enregistrer la conversation entre l'utilisateur (U) et l'agent (A).

7. Système selon la revendication 5 ou 6, **caractérisé en ce que** le serveur vocal interactif (3) comprend des moyens adaptés à fournir une pluralité d'options prédéfinies, que l'utilisateur (U) est susceptible de sélectionner à partir de son terminal (6), pour fournir un message de réponse au message de demande de consentement reçu du serveur vocal interactif (3).

8. Système selon la revendication 4 ou 5, **caractérisé en ce que** le serveur vocal interactif (3) comprend des moyens pour transmettre vocalement les informations de commande au terminal (6) de l'utilisateur (U).

9. Serveur vocal interactif (3) accessible via un réseau de télécommunications (8), **caractérisé en ce qu'**il comprend :
- des moyens pour générer un message de demande de consentement, en fonction d'informations de commande reçues par ledit serveur (3), lesdites informations de commande étant fournies au moyen d'un terminal (6) et relatives à l'achat d'au moins un produit ou service ;
- des moyens pour fournir ledit message de demande de consentement audit terminal (6) ; et
- des moyens pour l'achat dudit produit ou service sur réception d'un message de réponse de consentement émis par ledit terminal (6).
